# EUROPEAN PATENT APPLICATION

(11) **EP 2 824 569 A1**
(43) Date of publication of application: **14.01.2015**
(21) Application number: 12870664.5
(22) Date of filing: 26.06.2012
(51) Int. Cl.: G06F 9/50

(54) **METHOD AND DEVICE FOR SCHEDULING MULTIPROCESSOR OF SYSTEM ON CHIP (SOC)**

(30) Priority: 05.03.2012 CN 201210054957
(71) Applicant: ZTE Microelectronics Technology Co., Ltd., Shenzhen, Guangdong 518055 (CN)
(72) Inventor: WANG, Xiangyu, Shenzhen Guangdong 518057 (CN)
(74) Representative: D'Halleweyn, Nele Veerle Trees Gertrudis
(86) International application number: PCT/CN2012/077537
(87) International publication number: WO 2013/131340

(57) **Abstract**

Provided are a method and apparatus for scheduling multiple processors of a system on chip (SOC). The method includes: after receiving a task which is required to be executed, a main central processing unit (CPU) of a system on chip (SOC) obtaining a dynamic execution parameter of the task (S502); according to one or more currently available subsidiary CPUs in the SOC, the main CPU determining a task allocation solution which meets the dynamic execution parameter (S504); and in accordance with the task allocation solution, the main CPU scheduling one or more subsidiary CPUs to execute the task (S506). The solution achieves the scheduling of a multiprocessor of an SOC.

## Description

### Technical Field

The present invention relates to the field of communications, and in particular relates to a method and apparatus for scheduling multiple processors of a system on chip (SOC).

### Background

At present, a multiprocessor system has been widely applied, but there is no explicit processing method in the related art about how to combine a plurality of homogeneous/heterogeneous central processing unit (CPU) clusters together as a whole so as to complete a batch of tasks.

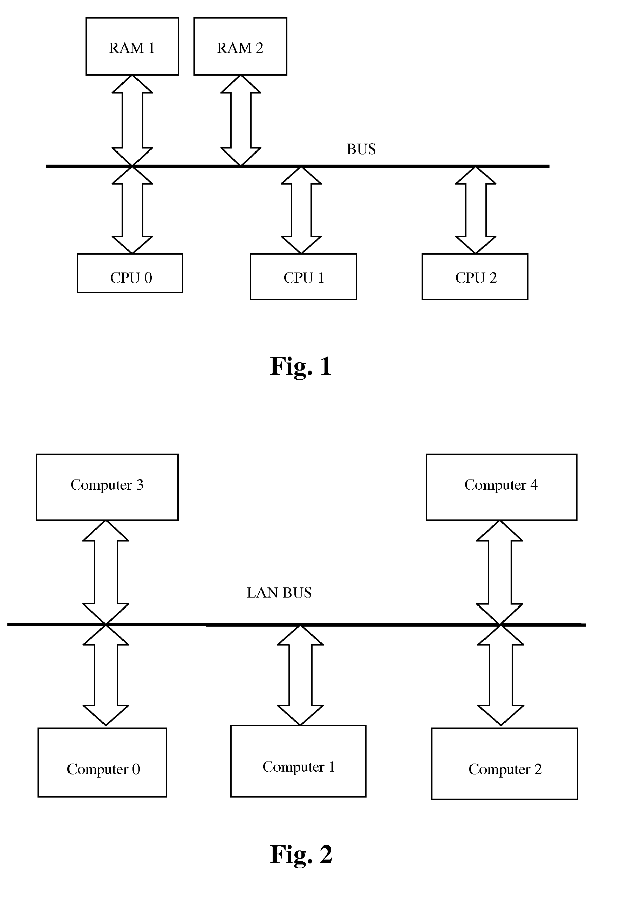

At present, a most commonly used parallel processing method is to use a symmetrical multi-processing (SMP) system (as shown in figure 1), that is, a plurality of homogeneous processors shares all peripheral equipment, such as memory/external interruption/external equipment, on the premise that parallel technologies such as cache consistency and memory consistency have been solved. Such a software system may select an operating system, such as Linux/Windows, which supports the SMP to load and execute a task. The operating system divides the task into a plurality of subtasks and dynamically schedules same to suitable target processors to load and execute.

Another more frequently used parallel processing mode is a computer cluster method (as shown in figure 2), that is, each independent computer is taken as a single node in the whole system. The task is automatically distributed to other computers by an additional computer or a certain computer in a network through the network, and after the task is executed, all the computers feed back information to the distribution computer and end the execution of the task.

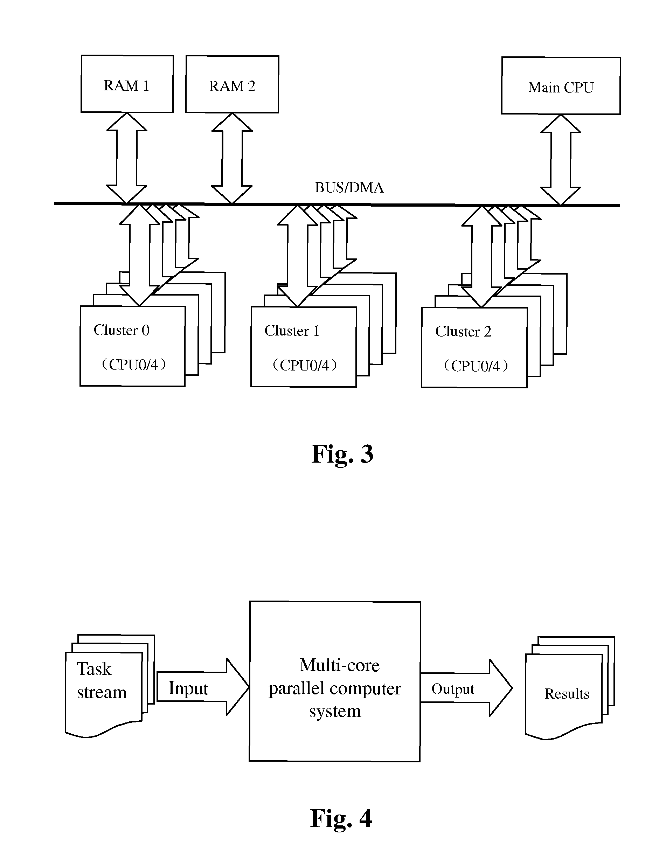

Figure 3 is a schematic diagram of an SOC multi-core scheduling framework according to the related art, and in the system on chip (SOC) as shown in figure 3, if the communication speed of a CPU in cluster is faster, then a plurality of homogeneous CPUs can be taken as one cluster (it is suggested that the homogeneous CPUs compose one cluster, and in particular situations, the heterogeneous CPUs are also supported) to exist, and can coexist with CPU cluster of other frameworks to share all the external memory and peripherals. Figure 4 is a schematic diagram of an SOC parallel computing framework according to the related technologies, and as shown in figure 4, an SOC system can obtain a task stream from the external, wherein the task stream can contain a plurality of binary execution codes which are generated by compiling according to processor types of different frameworks. Theses codes can be dynamically executed automatically according to the amount of the processors allocated, and can communicate with any computer in an allocated processor group, and have functions of error report and final result feedback. Code writing rules can meet an industry multiprocessor programming standard, for example, a message passing interface (MPI) standard.

A processing solution is provided in the related art, and in the processing solution, a main operating system can monitor some of the behaviours of a subsidiary operating system, and send a command thereto so as to enable it to adjust the current action, but cannot realize task scheduling. For another example, in another processing solution provided in the related art, the main thereof is transaction-level/thread-level detail scheduling strategy processing, and using an MPI multiprocessor scheduling method.

It can be seen therefrom that in the SOC related art, the processor cannot be taken as a basic scheduling unit to realize task scheduling in homogeneous/heterogeneous processing cluster.

### Summary

With respect to the problem in the related art that the processor cannot be taken as the basic scheduling unit in an SOC system to realize the execution of the task scheduling, a method and apparatus for scheduling multiple processors of a system on chip (SOC) are provided so as to solve the above-mentioned problem.

According to one embodiment of the present invention, a method for scheduling multiple processors of the system on chip (SOC) is provided, comprising: after receiving a task which is required to be executed, a main central processing unit (CPU) of the system on chip (SOC) obtaining a dynamic execution parameter of the task; the main CPU determining, according to one or more currently available subsidiary CPUs in the SOC, a task allocation solution which meets the dynamic execution parameter; and the main CPU scheduling, in accordance with the task allocation solution, one or more subsidiary CPUs to execute the task.

In the described embodiment, the dynamic execution parameter comprises: a type of a CPU executing the task; and the main CPU determining, according to one or more currently available subsidiary CPUs in the SOC, the task allocation solution which meets the dynamic execution parameter comprises: allocating the task to one or more subsidiary CPUs corresponding to the type of the CPU in one or more currently available subsidiary CPUs in the SOC.

In the described embodiment, the dynamic execution parameter further comprises: a maximum number of CPUs executing the task in parallel; and the main CPU determining, according to one or more currently available subsidiary CPUs in the SOC, the task allocation solution which meets the dynamic execution parameter comprises: allocating the task to one or more subsidiary CPUs corresponding to the type of the CPU in one or more currently available subsidiary CPUs in the SOC, wherein the amount of the one or more subsidiary CPUs is not greater than the maximum number of the CPUs.

In the described embodiment, the main CPU scheduling, according to the task allocation solution, one or more subsidiary CPUs to execute the task comprises: the main CPU selecting one subsidiary CPU from a plurality of the subsidiary CPUs as a virtual main CPU, and distributing the task to the selected virtual main CPU; and the selected virtual main CPU scheduling a plurality of CPUs in the subsidiary CPUs to execute the task.

In the described embodiment, the selected virtual main CPU scheduling a plurality of CPUs in the subsidiary CPUs to execute the task comprises: the selected virtual main CPU receiving results for executing the task which are fed back by respective subsidiary CPUs; and the selected virtual main CPU summarizing the results which are fed back by respective subsidiary CPUs and feeding back a result summary the main CPU.

In the described embodiment, the dynamic execution parameter further comprises: a maximum execution time of the task; and the method further comprises: in a case where the result summary is not received after the maximum execution time is exceeded, the main CPU notifying the subsidiary CPUs which execute the task of stopping executing the task, and releasing CPU resources occupied by the task.

In the described embodiment, a plurality of the subsidiary CPUs comprise: subsidiary CPUs belonging to a same CPU cluster.

According to another embodiment of the present invention, an apparatus for scheduling multiple processors of a system on chip (SOC) is provided, comprising: an acquisition module, which is configured to acquire a dynamic execution parameter of a task after the task which is required to be executed is received by a main central processing unit (CPU) of the system on chip (SOC); a determination module, which is configured to determine a task allocation solution which satisfies the dynamic execution parameter according to one or more currently available subsidiary CPUs in the SOC; and a scheduling module, which is configured to schedule one or more subsidiary CPUs to execute the task in accordance with the task allocation solution.

In the described embodiment, in a case where the dynamic execution parameter comprises a type of a CPU executing the task: the determination module is further configured to allocate the task to one or more subsidiary CPUs corresponding to the type of the CPU in one or more currently available subsidiary CPUs in the SOC.

In the described embodiment, in a case where the dynamic execution parameter comprises a maximum number of the CPUs executing the task in parallel: the determination module is further configured to allocate the task to one or more subsidiary CPUs corresponding to the type of the CPU in one or more currently available subsidiary CPUs in the SOC, wherein the amount of the one or more subsidiary CPUs is not greater than the maximum number of the CPUs.

In the described embodiment, a plurality of the subsidiary CPUs determined by the determination module comprise: subsidiary CPUs belonging to a same CPU cluster.

By means of the present invention, after receiving a task which is required to be executed, a main CPU of an SOC obtaining a dynamic execution parameter of the task; according to one or more currently available subsidiary CPUs in the SOC, determining a task allocation solution which meets the dynamic execution parameter; and in accordance with the determined task allocation solution, scheduling one or more subsidiary CPUs to execute the above-mentioned task, which achieve multiprocessor scheduling by taking a processor as a basic scheduling unit.

### Description of the Drawings

Drawings, provided for further understanding of the present invention and forming a part of the specification, are used to explain the present invention together with embodiments of the present invention rather than to limit the present invention. In the drawings:
Fig. 1 is a schematic diagram of an SMP multiprocessor framework according to the related art.
Fig. 2 is a schematic diagram of a computer cluster framework according to the related art.
Fig. 3 is a schematic diagram of an SOC multi-core scheduling framework according to the related art.
Fig. 4 is a schematic diagram of an SOC parallel computing framework according to the related art.
Fig. 5 is a flowchart of a method for scheduling multiple processors of a system on chip (SOC) according to the embodiments of the present invention.
Fig. 6 is an improved schematic diagram of an executable task according to the embodiments of the present invention.
Fig. 7 is a schematic diagram of a summary method of subsidiary CPUs according to the embodiments of the present invention.
Fig. 8 is a schematic diagram of interactions between MAIN CPU and other CLUSTER CPUs according to the embodiments of the present invention.
Fig. 9 is a structure diagram of an apparatus for scheduling multiple processors of a system on chip (SOC) according to the embodiments of the present invention.

### Detailed description of the Embodiments

The preferred embodiments are described in conjunction with the drawings as follows. It should be noted that the embodiments and the characteristics of the embodiments can be combined with each other if no conflict is caused.

### Embodiment I

According to the embodiment of the present invention, a method for scheduling multiple processors of a system on chip (SOC) is provided, which can realize the scheduling of the multiple processors of the SOC.

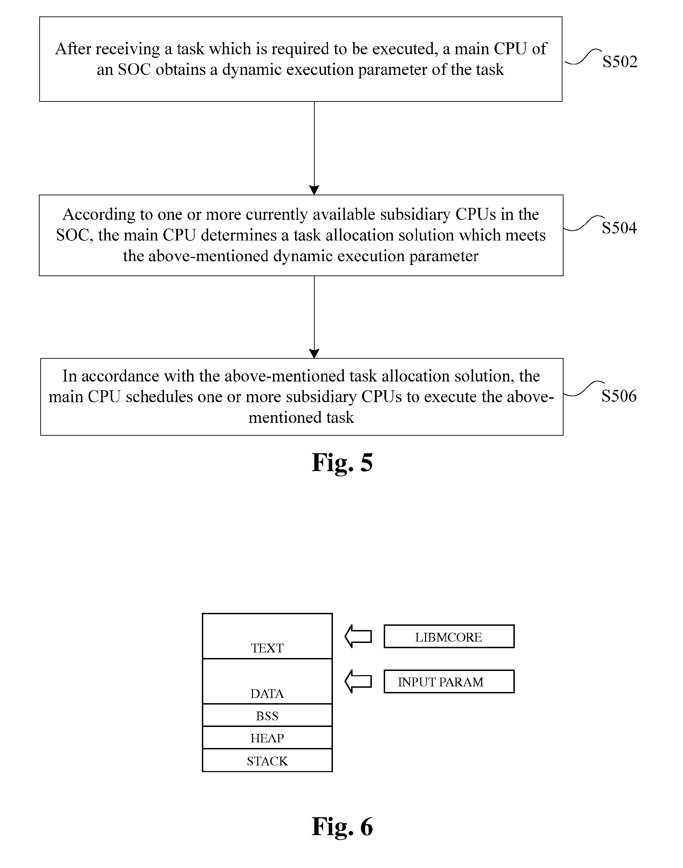

Fig. 5 is a flowchart of the method for scheduling the multiple processors of the system on chip (SOC) according to the embodiment of the present invention. As shown in Fig. 5, the method may comprise the following steps (steps S502-S506).

Step S502, after receiving a task which is required to be executed, a main central processing unit (CPU) of the system on chip (SOC) obtains a dynamic execution parameter of the task.

Step S504, according to one or more currently available subsidiary CPUs in the SOC, the main CPU determines a task allocation solution which meets the above-mentioned dynamic execution parameter.

Step S506, in accordance with the above-mentioned task allocation solution, the main CPU schedules one or more subsidiary CPUs to execute above-mentioned task.

By means of the embodiment of the present invention, after receiving a task which is required to be executed, a main CPU of an SOC obtaining a dynamic execution parameter of the task; according to one or more currently available subsidiary CPUs in the SOC, determining a task allocation solution which meets the dynamic execution parameter; and in accordance with the determined task allocation solution, scheduling one or more subsidiary CPUs to execute the above-mentioned task, which achieve multiprocessor scheduling by taking a processor as a basic scheduling unit.

In a heterogeneous SOC system, different types of processors are contained, and different tasks correspond to different types of CPUs. For example, some tasks can only be executed by an ARM, and some tasks can only be executed by a DSP; however, some tasks can be executed either by the ARM or by the DSP. Therefore, in a preferred implementation of the embodiments of the present invention, the above-mentioned dynamic execution parameter can comprise the type of the CPU executing the task, at the moment, when the main CPU determines, according to one or more currently available subsidiary CPUs in the SOC, a task allocation solution which meets the dynamic execution parameter, the task can be allocated to one or more subsidiary CPUs corresponding to the type of the CPU in one or more currently available subsidiary CPUs in the SOC. By means of the present preferred implementation, the scheduling of the multiprocessor in the heterogeneous SOC system is realized, and a CPU of the required type can be scheduled for the task which is required to be executed.

After receiving the task which is required to be executed, the main CPU in the SOC can allocate the task which is required to be executed to the currently available subsidiary CPUs in the SOC to execute; and the amount of the CPUs that can be allocated to each task is different, which can be a fixed amount, and also can be a dynamic variable amount, or there is no restriction on the amount of the CPUs. Therefore, in another preferred implementation of the embodiments of the present invention, the above-mentioned dynamic execution parameter can further comprise the maximum number of the CPUs executing the task in parallel, at the moment, when the main CPU determines, according to one or more currently available subsidiary CPUs in the SOC, a task allocation solution which meets the dynamic execution parameter, the task can be allocated to one or more subsidiary CPUs, which correspond to the type of the CPU and the number thereof is not more than the maximum number of the CPUs executing the task in parallel, in one or more currently available subsidiary CPUs in the SOC. By means of the present preferred implementation, effective scheduling of the multiprocessor in the heterogeneous SOC system is realized.

In the SOC system, it is generally suggested that a plurality of homogeneous processors are combined together to form one cluster, during the design of hardware, the communication speed between CPUs belonging to the same cluster has been made faster than the communication speed between CPUs belonging to different cluster, and thus the speed for the CPUs belonging to the same cluster to process a task is also faster. Therefore, in another preferred implementation of the embodiments of the present invention, when the main CPU determines, according to one or more currently available subsidiary CPUs in the SOC, a task allocation solution which meets the dynamic execution parameter, the task can be allocated to a plurality of CPUs belonging to the same cluster. For example, in an SOC system, every four continuous CPUs are in the same cluster, after a task which is required to be executed is received, it is determined that the maximum number of the CPUs executing the task in parallel is four according to the obtained dynamic execution parameter; in order to realize the purpose of allocating a plurality of subsidiary CPUs with the same task to the same cluster so as to improve the efficiency, the task can be distributed to the four subsidiary CPUs belonging to the same cluster to execute.

After determining, according to one or more currently available one or more subsidiary CPUs in the SOC, a task allocation solution which meets the dynamic execution parameter, the main CPU can schedule one or more subsidiary CPUs to execute the task in accordance with the determined task allocation solution; and in another preferred implementation of the embodiments of the present invention, the way of subsidiary CPUs summary is taken to schedule the subsidiary CPUs to execute the task, that is, the main CPU selects one subsidiary CPU (referred to as a virtual main CPU) from the plurality of subsidiary CPUs, and distributes the task to the selected subsidiary CPU, then the selected subsidiary CPU schedules subsidiary CPUs in the plurality of subsidiary CPUs to execute the task. In practical applications, a subsidiary CPU which has the fastest communication speed with a plurality of determined subsidiary CPUs in the subsidiary CPUs can be selected so as to enable the subsidiary CPU to have higher efficiency to execute the task.

Furthermore, the selected subsidiary CPU schedule subsidiary CPUs in the plurality of subsidiary CPUs to execute the task; each subsidiary CPU executes the distributed tasks in parallel and returns results of task execution to the selected subsidiary CPU. The selected CPU receives the results of task execution fed back by each subsidiary CPU, and feeds back a summary of the results fed back by each subsidiary CPU to the main CPU. The main CPU receives the summary of the results of the selected subsidiary CPUs and outputs a task execution result.

In another preferred implementation of the embodiments of the present invention, in order to avoid the occupation of system resources for a long time because of task execution, a maximum execution time of the tasks can be set. The dynamic execution parameter can further comprise the maximum execution time of the task, and at the moment, in the case that the result summary is not received after the maximum execution time of the task is exceeded, the main CPU notifies the subsidiary CPUs which execute the task of stopping executing the task, and releases CPU resources occupied by the task.

### Embodiment II

According to the embodiment of the present invention, in an SOC multiprocessor framework as shown in figure 3, taking a multi-task steam parallel computer framework of an SOC system as shown in figure 4 for example, a scheduling mode and processing flow of the multi-core parallel computer system are explained. In a homogeneous/heterogeneous multi-core computer system which is suitable for an SOC implementation (a single-chip environment), an independent processor (a main CPU) is taken as a scheduling processor, which receives a task steam and feeds back a task result. A method provided by the embodiment of the present invention can be applied to an SOC system, and can also be applied in a multi-computer cluster environment which is composed of a plurality of homogeneous and heterogeneous computer clusters.

In the embodiment of the present invention, the MAIN CPU receives a task and allocates the task to a corresponding computer cluster; the corresponding computer cluster processes the allocated task in parallel and feeds back an execution result to the MAIN CPU; and the MAIN CPU obtains the execution result of the task and completes all scheduling works. In the SOC system, the processor is taken as a basic cell of scheduling, and the MAIN CPU obtains the task and allocates same to different subsidiary CPUs. In practical applications, virtual processor clusters will be allocated to each task, and there is a corresponding correlation between the virtual processor cluster and actual processor clusters.

An SOC multi-core system is constructed, and the homogeneous processors are placed in the same cluster. The constructed SOC multi-core system contains a main CPU, and all the other CPUs are called subsidiary CPUs. Both the main CPU and the subsidiary CPUs can access the memory of the same address space, so as to facilitate issuing tasks to the subsidiary CPUs.

In the embodiment of the present invention, all the tasks required to be loaded are stored in a binary form, which can contain the priority (whether being scheduled preferentially) of the tasks, the maximum number of processors which can be executed in parallel (a fixed amount or unlimited amount), the maximum execution time (allowing to deprive the execution of the tasks after the time is arrived), the type of a target processor (a target cluster being loaded into) and a dynamic data area (dynamic information such as the number of executable processors being allocated to).

In addition, all the tasks required to be loaded are written according to multiprocessor programming specification (such as MPI), and all the tasks required to be loaded are transformed into suitable for parallel scheduling and operation, and the transformation of executable tasks is as shown in figure 6. For example, communication functions between multiple CPUs are increased, and functions for obtaining the current CPU ID, etc. are increased, etc. Therefore, the program is required to be linked to a related multi-core library together when being complied, and the name of the library can be called "libmcore.a"; and the program is required to be linked to such a library together when being actually complied and finally generates a target file.

Furthermore, all the tasks required to be loaded store dynamic execution parameters, such as being operated on how many CPU cores or other parameters, in a fixed position. The parameters are required to be placed in a designated place in the mode of command line or other modes, for example, DS: 0x100 and in an address range of the length being 512 bytes, such that when the tasks are actually loaded, theses dynamic parameters are required to be actually written into the execution space of the tasks.

All the processor groups that can be executed by the subsidiary CPUs are virtual CPU groups, and there should be a certain correlation between same and actual physical CPUs; the main CPU dynamically allocates corresponding physical CPUs according to task natures; in addition, intertask communications must be performed according to the multiprocessor programming specification (such as MPI) between processors, which actually relate to communications between a plurality of virtual processors; and when the main CPU actually allocates the tasks, the virtual processors are corresponding to the actual physical processors.

On the basis of the above-mentioned description, it is assumed that there are 12 CPU resources in total currently, and all the CPU resources are homogeneous and all the tasks are homogeneous processor target images. In addition, it is assumed that every four continuous CPUs are in the same cluster, wherein four CPUs are in use, and the remaining eight CPU resources are idle; and task 0 can only be operated on one CPU, task 1 can be operated on three CPUs in maximum, and task 2 does not limit the number of the executed CPUs. It is assumed that all the physical CPU serial numbers currently are: 0, 1, 2, 3, 4, 5, 6, 7, 8, 9, 10, 11; the CPU serial numbers being occupied are: 2, 8, 9, 11; such that the available CPU serial numbers are: 0, 1, 3, 4, 5, 6, 7, 10; in order to realize the purpose of allocating a plurality of subsidiary CPUs with the same task to the same cluster so as to improve the efficiency, the used allocation mode is as follows:
Task 1 occupies three CPUs, but Task 2 occupies four CPUs, which is just the capacity of one cluster; therefore, an idle whole cluster 1 should be allocated to Task 2 preferentially; however, cluster 0 has three idle CPUs, thus can also be just allocated to Task 1, and the remaining one is allocated to Task 0.

The allocation of the optimized CPU resources is as shown in the following table:

| | Physical CPU | State | Task Name | Task Logic CPU |
|---|---|---|---|---|
| CLUSTER 0 | 0 | idle | Task 1 | 0 |
| | 1 | idle | Task 1 | 1 |
| | 2 | occupy | | |
| | 3 | idle | Task 1 | 2 |
| CLUSTER 1 | 4 | idle | Task 2 | 0 |
| | 5 | idle | Task 2 | 1 |
| | 6 | idle | Task 2 | 2 |
| | 7 | idle | Task 2 | 3 |
| CLUSTER 2 | 8 | occupy | | |
| | 9 | occupy | | |
| | 10 | idle | Task 0 | 0 |
| | 11 | occupy | | |

The main CPU allocates tasks to suitable processors according to the priority of the tasks and the type of the processors to which the tasks belong and according to the distribution situation of the current idle processors, and the physical can be allocated with reference to the above-mentioned allocation method. For any task, all actual application programs thereof face the virtual CPU group, and imply detail information of the physical CPUs.

When the main CPU allocates the tasks to the virtual CPU groups, a certain subsidiary CPU in the allocated virtual subsidiary CPU group can be taken as the virtual main CPU. The virtual main CPU may not select the first CPU in the group, and preferably, can be allocated to a position that has the fastest communication speed with other processors in the group. Virtual subsidiary CPU 0 is generally considered as a main CPU (which is different from the main CPU in the whole framework and can be referred to as the virtual main CPU) in the virtual CPU group. The task scheduling and execution mode of the virtual main CPU are performed by using the subsidiary CPU summary mode, and the above-mentioned virtual main CPU is referred to as logic CPU 0 in the following. The flow of the subsidiary CPU summary mode is described in detail below.

The subsidiary CPU summary mode is mainly selecting one subsidiary CPU form the virtual subsidiary CPU group as the main CPU in the subsidiary CPU group, and summary works of the tasks are completed by the selected subsidiary CPU. That is, one subsidiary CPU of the plurality of subsidiary CPUs is taken as the main CPU with respect to that in other subsidiary CPUs, which assists to complete function of task allocation and data statistics. The program needs to increase a synchronization mechanism on written codes when being executed; therefore, the execution efficiency of the subsidiary CPU cannot reach the highest, at least one CPU is required to wait the completion of the tasks of other CPUs, and finally feeds back the result to the main CPU. For clarity of description, the main CPU in the subsidiary CPU group is assumed to be logic CPU 0, although the mode does not have the high efficiency of the main CPU scheduling mode, the burden of the main CPU is reduced, and the task of unifying results is also placed in the subsidiary CPU group to complete. From logic implementations, the summary mode of the subsidiary CPUs is more operable than the scheduling mode of the main CPU.

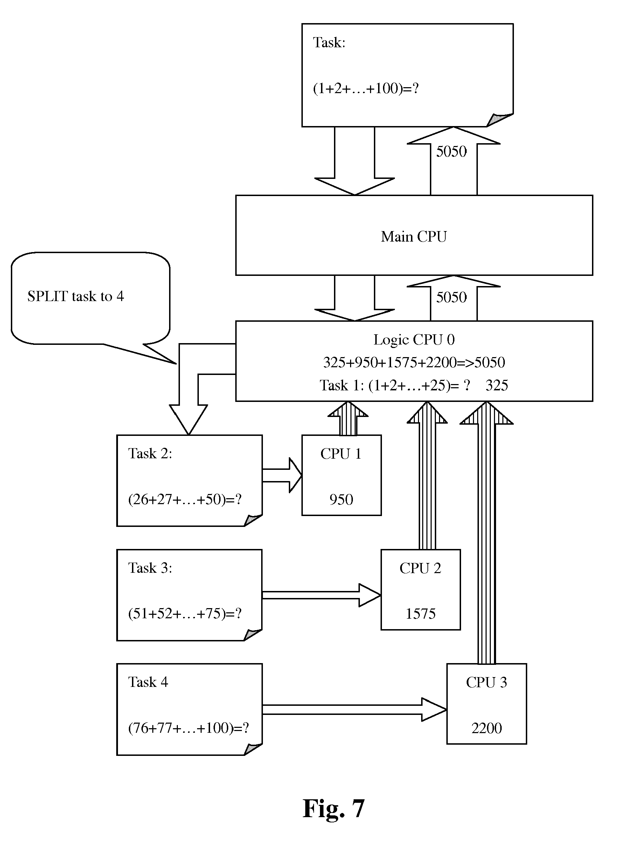

For example, in order to calculate 1 + 2 + ... + 100, the task can be decomposed into four different programs as follows, and can be decompose to four different CPUs to operate. Figure 7 is schematic diagram of the summary mode of the subsidiary CPUs according to the embodiments of the present invention; as shown in figure 7, logic CPU 0 executes "1 + 2 + ... + 25" and wait the completion of the execution of other CPUs; logic CPU 1 executes "26 + 27 + ... + 50" and reports the result 950 to logic CPU 0; logic CPU 2 executes "51 + 52 + ... + 75" and reports the result 1575 to logic CPU 0; logic CPU 3 executes "76 + 77 + ... + 100" and reports the result 2200 to logic CPU 0; after receiving all the results, logic CPU 0 calculates and summarizes each result and reports the final result to the main CPU. The main CPU directly output s the final result "5050", and then completes the execution of this task.

The advantages of the subsidiary CPU summary lie in reducing the difficulty of the task allocation and also reducing the burden of the main CPU, and the price paid therefor is that the program coding is relatively complex, because there must be a synchronization mechanism between a plurality of subsidiary CPUs, which has a certain influence on the execution efficiency.

The same codes as follows are executed on each subsidiary CPU, but different code segments are executed through the CPU ID, and corresponding function pseudo codes taking the subsidiary CPU summary mode are as follows:

```
      int func_sum (int start_data, int end_data)
      {
            int i;
            int sum = 0;
            for (i =s tart_data; i <= end_data; i++)
                  sum+ = i;
            return sum;
      }
      int main ()
      {
            int result;
            int data;
            int id;
            id = get_cpuid ();
            data = id * 25 + 1;
            result = func_sum (data, data + 24);
            if (id == 0)
                  {
                   wait_all_cpu_data ();
                   send_result_to_main_cpu (result + cpu1_result + cpu2_result +
 cpu3_result);
                  }
            else
                  send_result_to_cpu0 (result);
      return 0;
      }
```

Logic CPU 0 needs to execute the work of accumulating all the subsidiary CPU feedback data, and finally feeds back the results of the task to the main CPU to complete. Synchronous communications between CPUs are mainly completed inside the subsidiary CPUs, which reduce the pressure of the main CPU.

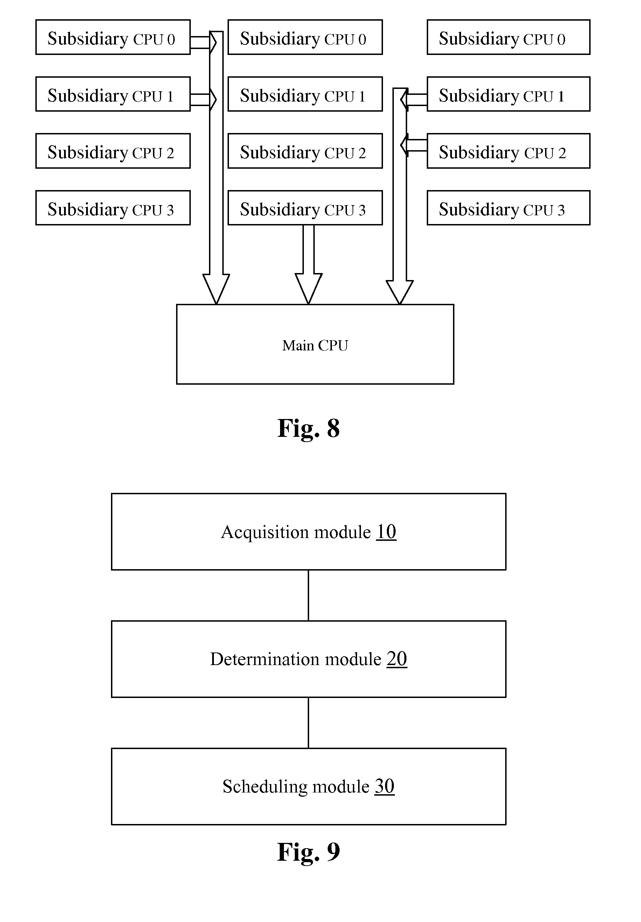

After the execution of logic CPU 0 is finished, the result is required to be fed back to the main CPU; figure 8 is a schematic diagram of the MAIN CPU interacting with other CLUSTER CPUs according to the embodiments of the present invention; as shown in figure 8, in the embodiments of the present invention, any CPU can feed back information to the main CPU regularly.

According to an execution condition of a task stream, when the maximum operation time thereof is exceeded, the main CPU can deprive the task and release processor resources occupied thereby. After the execution of the task is finished, the main CPU outputs the operation result and releases resources occupied by the task. In practical applications, as long as there is a waiting task stream and an available processor resource, then the main CPU loops until all the scheduling works are completed.

In the embodiments of the present invention, CPU mapping and priority processing are relatively easy to do; the embodiments of the present invention provide that the task dynamically links a multi-core communication library and embeds dynamic parameters, and according to the scheduling thinking and method of the subsidiary CPU summary mode, but is not limited to the above embodiment, and should contain other similar use cases of dynamic processor scheduling. In addition, invention embodiments provide a multi-task processing and scheduling mode and method of a parallel computer which is suitable for an SOC implementation, and can also be practically applied in the aspect of task scheduling and processing of a non-SMP system under a multi-core framework.

### Embodiment III

According to the embodiment of the present invention, an apparatus for scheduling multiple processors of a system on chip (SOC) is also provided, which can realize the method provided in the embodiment of the present invention.

Figure 9 is a structural block diagram of the device for scheduling the multiprocessor of the system on chip (SOC) according to the embodiment of the present invention; and as shown in figure 9, the device can comprise: an acquisition module **10,** a determination module **20** and a scheduling module **30.** The acquisition module **10** is set to acquire a dynamic execution parameter of the task after a task which is required to be executed is received by the main central processing unit (CPU) of the system on chip (SOC); the determination module **20** couples with the acquisition module **10** and is set to determine a task allocation solution which satisfies the above-mentioned dynamic execution parameter according to one or more currently available subsidiary CPUs in the SOC; and the scheduling module **30** couples with the determination module **20** and is set to schedule one or more subsidiary CPUs to execute the above-mentioned task in accordance with the above-mentioned task allocation solution.

By means of the embodiment of the present invention, after receiving a task which is required to be executed, a main CPU of an SOC obtaining a dynamic execution parameter of the task; according to one or more currently available subsidiary CPUs in the SOC, determining a task allocation solution which meets the dynamic execution parameter; and in accordance with the determined task allocation solution, scheduling one or more subsidiary CPUs to execute the above-mentioned task, which achieve multiprocessor scheduling by taking a processor as a basic scheduling unit.

In a heterogeneous SOC system, different types of processors are contained, and different tasks correspond to different types of CPUs. For example, some tasks can only be executed by an ARM, and some tasks can only be executed by a DSP; however, some tasks can be executed either by the ARM or by the DSP. Therefore, in a preferred implementation of the embodiment of the present invention, in the case that the dynamic execution parameter comprises the type of a CPU executing the task, the determination module **20** is further configured to allocate the task to one or more subsidiary CPUs corresponding to the type of the CPU in one or more currently available subsidiary CPUs in the SOC. By means of the present preferred implementation, the scheduling of the multiprocessor in the heterogeneous SOC system is realized, and a CPU of the required type can be scheduled for the task which is required to be executed.

After receiving the task which is required to be executed, the main CPU in the SOC can allocate the task which is required to be executed to the currently available subsidiary CPUs in the SOC to execute; and the amount of the CPUs that can be allocated to each task is different, which can be a fixed amount, and also can be a dynamic variable amount, or there is no restriction on the amount of the CPUs. Therefore, in another preferred implementation of the embodiment of the present invention, in the case that the dynamic execution parameter comprises the maximum number of the CPUs executing the task in parallel, the determination module 20 is further configured to allocate the task to one or more subsidiary CPUs corresponding to the above-mentioned type of the CPU in one or more currently available subsidiary CPUs in the SOC, wherein the amount of the above-mentioned one or more subsidiary CPUs is not greater than the maximum number of the CPUs. By means of the present preferred implementation, scheduling processors according to the maximum number of the CPUs executing the task in parallel is realized.

In the SOC system, a plurality of homogeneous processors can be combined together to form one cluster, the communication speed between CPUs belonging to the same cluster is faster than the communication speed between CPUs belonging to different cluster, and thus the speed for the CPUs belonging to the same cluster to process a task is also faster. Therefore, in another preferred implementation of the embodiments of the present invention, when the determination module **20** determines, according to one or more currently available subsidiary CPUs in the SOC, a task allocation solution which meets the dynamic execution parameter, the task can be allocated to a plurality of CPUs belonging to the same cluster. For example, in an SOC system, every four continuous CPUs are in the same cluster, after a task which is required to be executed is received, it is determined that the maximum number of the CPUs executing the task in parallel is four according to the obtained dynamic execution parameter; in order to realize the purpose of allocating a plurality of subsidiary CPUs with the same task to the same cluster so as to improve the efficiency, the task can be distributed to the four subsidiary CPUs belonging to the same cluster to execute.

After the determination module **20** determining, according to one or more currently available one or more subsidiary CPUs in the SOC, a task allocation solution which meets the dynamic execution parameter, the scheduling module **30** can schedule one or more subsidiary CPUs to execute the task in accordance with the determined task allocation solution; and in another preferred implementation of the embodiments of the present invention, the way of subsidiary CPUs summary is taken to schedule the subsidiary CPUs to execute the task, that is, the scheduling module **30** selects one subsidiary CPU from the plurality of subsidiary CPUs, and distributes the task to the selected subsidiary CPU, then the selected subsidiary CPU schedules subsidiary CPUs in the plurality of subsidiary CPUs to execute the task. In practical applications, a subsidiary CPU which has the fastest communication speed with a plurality of determined subsidiary CPUs in the subsidiary CPUs can be selected so as to enable the subsidiary CPU to have higher efficiency to execute the task.

Furthermore, the selected subsidiary CPU schedule subsidiary CPUs in the plurality of subsidiary CPUs to execute the task; each subsidiary CPU executes the distributed tasks in parallel and returns results of task execution to the selected subsidiary CPU. The selected CPU receives the results of task execution fed back by each subsidiary CPU, and feeds back a summary of the results fed back by each subsidiary CPU to the main CPU. The main CPU receives the summary of the results of the selected subsidiary CPUs and outputs a task execution result.

In another preferred implementation of the embodiments of the present invention, in order to avoid the occupation of system resources for a long time because of task execution, a maximum execution time of the tasks can be set. The dynamic execution parameter can further comprise the maximum execution time of the task, and at the moment, in the case that the result summary is not received after the maximum execution time of the task is exceeded, the main CPU notifies the subsidiary CPUs which execute the task of stopping executing the task, and releases CPU resources occupied by the task.

It can be seen from the above description that the present invention realizes the following technical effects: after receiving a task which is required to be executed, a main CPU of an SOC obtaining a dynamic execution parameter of the task; according to one or more currently available subsidiary CPUs in the SOC, determining a task allocation solution which meets the dynamic execution parameter; and in accordance with the determined task allocation solution, scheduling one or more subsidiary CPUs to execute the above-mentioned task, which achieve multiprocessor scheduling by taking a processor as a basic scheduling unit. Allocating the task to one or more subsidiary CPUs corresponding to the type of the CPU in one or more currently available subsidiary CPUs in the SOC realizes the scheduling of the multiprocessor in a heterogeneous SOC system and can schedule the required type of CPUs for the task which is required to be executed. Allocating the task to a plurality of CPUs belonging to the same cluster so as to make the communication speed between a plurality of CPUs faster and improves the task processing efficiency. Meanwhile, using the subsidiary CPU summary reduces the burden of the main CPU and improves the reliability of the system.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The above description is only preferred embodiments of the present invention and is not intended to limit the present invention, and the present invention can have a variety of changes and modifications for ordinary person skilled in the field. Any modification, equivalent replacement, or improvement made within the spirit and principle of the present invention shall all fall within the protection scope of the present invention.

## Claims

1. A method for scheduling multiple processors of a system on chip (SOC), **characterized by** comprising:
after receiving a task which is required to be executed, a main central processing unit (CPU) of the system on chip (SOC) obtaining a dynamic execution parameter of the task;
the main CPU determining, according to one or more currently available subsidiary CPUs in the SOC, a task allocation solution which meets the dynamic execution parameter;
and the main CPU scheduling, in accordance with the task allocation solution, one or more subsidiary CPUs to execute the task.

2. The method according to claim 1, **characterized in that**
the dynamic execution parameter comprises: a type of a CPU executing the task;
and the main CPU determining, according to one or more currently available subsidiary CPUs in the SOC, the task allocation solution which meets the dynamic execution parameter comprises: allocating the task to one or more subsidiary CPUs corresponding to the type of the CPU in one or more currently available subsidiary CPUs in the SOC.

3. The method according to claim 2, **characterized in that**
the dynamic execution parameter further comprises: a maximum number of CPUs executing the task in parallel;
and the main CPU determining, according to one or more currently available subsidiary CPUs in the SOC, the task allocation solution which meets the dynamic execution parameter comprises: allocating the task to one or more subsidiary CPUs s corresponding to the type of the CPU in one or more currently available subsidiary CPUs in the SOC, wherein the amount of the one or more subsidiary CPUs is not greater than the maximum number of the CPUs.

4. The method according to claim 3, **characterized in that** the main CPU scheduling, according to the task allocation solution, one or more subsidiary CPUs to execute the task comprises:
the main CPU selecting one subsidiary CPU from a plurality of the subsidiary CPUs as a virtual main CPU, and distributing the task to the selected virtual main CPU;
and the selected virtual main CPU scheduling a plurality of CPUs in the subsidiary CPUs to execute the task.

5. The method according to claim 4, **characterized in that** the selected virtual main CPU scheduling a plurality of CPUs in the subsidiary CPUs to execute the task comprises:
the selected virtual main CPU receiving results for executing the task which are fed back by respective subsidiary CPUs;
and the selected virtual main CPU summarizing the results which are fed back by respective subsidiary CPUs and feeding back a result summary the main CPU.

6. The method according to claim 5, **characterized in that**
the dynamic execution parameter further comprises: a maximum execution time of the task;
and the method further comprises: in a case where the result summary is not received after the maximum execution time is exceeded, the main CPU notifying the subsidiary CPUs which execute the task of stopping executing the task, and releasing CPU resources occupied by the task.

7. The method according to any one of claims 1-6, **characterized in that** a plurality of the subsidiary CPUs comprise: subsidiary CPUs belonging to a same CPU cluster.

8. An apparatus for scheduling multiple processors of a system on chip (SOC), **characterized by** comprising:
an acquisition module, which is configured to acquire a dynamic execution parameter of a task after the task which is required to be executed is received by a main central processing unit (CPU) of the system on chip (SOC);
a determination module, which is configured to determine a task allocation solution which satisfies the dynamic execution parameter according to one or more currently available subsidiary CPUs in the SOC;
and a scheduling module, which is configured to schedule one or more subsidiary CPUs to execute the task in accordance with the task allocation solution.

9. The device according to claim 8, **characterized in that** in a case where the dynamic execution parameter comprises a type of a CPU executing the task:
the determination module is further configured to allocate the task to one or more subsidiary CPUs corresponding to the type of the CPU in one or more currently available subsidiary CPUs in the SOC.

10. The device according to claim 9, **characterized in that** in a case where the dynamic execution parameter comprises a maximum number of the CPUs executing the task in parallel:
the determination module is further configured to allocate the task to one or more subsidiary CPUs corresponding to the type of the CPU in one or more currently available subsidiary CPUs in the SOC, wherein the amount of the one or more subsidiary CPUs is not greater than the maximum number of the CPUs.

11. The device according to any one of claims 8-10, **characterized in that** a plurality of the subsidiary CPUs determined by the determination module comprise: subsidiary CPUs belonging to a same CPU cluster.
